(19) Europäisches Patentamt
European Patent Office
Office européen des brevets

(11) **EP 2 144 986 B1**

(12) **EUROPEAN PATENT SPECIFICATION**

(45) Date of publication and mention
of the grant of the patent:
**29.07.2020 Bulletin 2020/31**

(21) Application number: **08747588.5**

(22) Date of filing: **02.05.2008**

(51) Int Cl.:
*C23C 20/06* (2006.01)     *C23C 20/00* (2006.01)
*C23C 22/00* (2006.01)     *C02F 5/02* (2006.01)
*C11D 7/10* (2006.01)     *C11D 3/04* (2006.01)
*C11D 11/00* (2006.01)     *C23G 1/22* (2006.01)
*C23G 1/20* (2006.01)     *C23F 11/18* (2006.01)
*C23F 11/12* (2006.01)     *C23F 11/08* (2006.01)
*C11D 3/10* (2006.01)     *C02F 5/06* (2006.01)

(86) International application number:
**PCT/US2008/062558**

(87) International publication number:
**WO 2008/137785 (13.11.2008 Gazette 2008/46)**

(54) **WATER TREATMENT SYSTEM AND DOWNSTREAM CLEANING METHODS**

WASSERBEHANDLUNGSSYSTEM UND ABWÄRTSREINIGUNGSVERFAHREN

SYSTÈME DE TRAITEMENT DE L'EAU, ET PROCÉDÉS DE NETTOYAGE EN AVAL

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **04.05.2007 US 927575 P**

(43) Date of publication of application:
**20.01.2010 Bulletin 2010/03**

(73) Proprietor: **Ecolab USA Inc.
St. Paul, MN 55102-1390 (US)**

(72) Inventors:
• **MONSRUD, Lee, J.**
**Inver Grove Heights, MN 55076 (US)**
• **OLSON, Keith, E.**
**Apple Valley, MN 55124 (US)**
• **SMITH, Kim, R.**
**Woodbury, MN 55125 (US)**
• **MILLS, Kristen, A.**
**Hopkins, MN 55343 (US)**

(74) Representative: **Godemeyer Blum Lenze
Patentanwälte
Partnerschaft mbB - werkpatent
An den Gärten 7
51491 Overath (DE)**

(56) References cited:
**EP-A1- 0 495 451          WO-A1-2005/115927
FR-A1- 2 850 279          JP-A- 07 292 389
JP-A- 2003 525 104       US-A- 4 036 749
US-A1- 2006 069 001      US-B2- 7 033 980**

**Description**

**FIELD OF THE INVENTION**

The present invention relates to a method for reducing solubilized water hardness in a water source.

**BACKGROUND**

The level of hardness in water can have a deleterious effect in many systems. For example, when hard water alone, or in conjunction with cleaning compositions, contacts a surface, it can cause precipitation of hard water scale on the contacted surface. In general, hard water refers to water having a total level of calcium and magnesium ions in excess of 100 ppm expressed in units of ppm calcium carbonate. Often, the molar ratio of calcium to magnesium in hard water is 2:1 or 3:1. Although most locations have hard water, water hardness tends to vary from one location to another.

Water hardness has been addressed in a number of ways. One method currently used to soften water is via ion exchange, e.g., by adding sodium to the water to exchange the calcium and magnesium ions in the water with sodium associated with a resin bed in a water softening unit. The calcium and magnesium adhere to a resin in the softener. When the resin becomes saturated it is necessary to regenerate it using large amounts of sodium chloride dissolved in water. The sodium displaces the calcium and magnesium, which is flushed out in a briny solution along with the chloride from the added sodium chloride. When water softeners regenerate they produce a waste stream that contains significant amounts of chloride, creating a burden on the system, e.g., sewer system, in which they are disposed of, including a multitude of downstream water re-use applications like potable water usages and agriculture.

Hard water is also known to reduce the efficacy of detergents. One method for counteracting this includes adding chelating agents or sequestrants into detersive compositions that are intended to be mixed with hard water in an amount sufficient to handle the hardness. However, in many instances the water hardness exceeds the chelating capacity of the composition. As a result, free calcium ions may be available to attack active components of the composition, to cause corrosion or precipitation, or to cause other deleterious effects, such as poor cleaning effectiveness or lime scale build up. US 4,036,749 discloses the treatment of water that reduces the scaling tendency of the water during its subsequent use or processing. The treatment comprises precipitation and separation of the calcium values of the water as calcium carbonate by the addition of magnesium hydroxide precipitant thereto, with, as needed, a carbonate source, e.g., carbon dioxide.

**SUMMARY**

The present invention provides a method for reducing solubilized water hardness in a water source. The method comprises contacting the water source having a pH of between 6 and 9 with a composition comprising a solid conversion agent. The conversion agent causes calcium hardness ions in the water source to substantially precipitate in a non-calcite crystalline form that does not need to be removed from the water source, such that the solubilized water hardness is substantially reduced. The solid conversion agent is selected from the group consisting of magnesium oxide. The method is characterized in that the step of contacting the water with the conversion agent comprises passing the water through a media bed of magnesium oxide particles, the media being held in a tank

In some embodiments, the non-calcite crystalline form is aragonite. In still yet other embodiments, the conversion agent is insoluble in water.

In other embodiments, the solid conversion agent is contained in a column. The column is agitated by a method selected from the group consisting of the flow of water through the column, by fluidization, mechanical agitation, high flow backwash, recirculation, and combinations thereof, in some embodiments. In still yet other embodiments, the temperature of the water source prior to contact with the conversion agent is between 54,44 °C (130°F) and 85°C (185°F).

**BRIEF DESCRIPTION OF DRAWINGS**

Figure 1 is a schematic view of an apparatus for use in treating water described herein.
Figure 2 is a photograph of glasses treated with varying ratios of magnesium oxide to calcite according to the methods described herein.
Figure 3 is a photograph of glasses rinsed with either treated or untreated water as described in Example 1(c).
Figure 4 is a photograph of glasses washed with either: a chelant free detergent and treated water; or a conventional detergent and untreated water, as described in Example 1(d).
Figure 5 is a photograph of glasses washed with either: a chelant free detergent treated water, and a rinse aid; or a conventional detergent, untreated water, and a rinse aid, as described in Example 1(d).

Figure 6 is a photograph of soiled glasses washed with either: a chelant free detergent and treated water; or a conventional detergent and untreated water, as described in Example 1(d).

Figure 7 is a graphical depiction of the effect of various conversion agents described herein on solubilized water hardness.

Figure 8 is a graphical depiction of the percent soil removal on various soils and textiles of either: a chelant free detergent and treated water; or a conventional detergent and untreated water, as described in Example 3.

Figure 9 is a graphical depiction of the percent ash left on wash cloths washed with either treated or untreated water as described in Example 3.

Figure 10 is a graphical depiction of the amount of calcium (ppm) left on wash cloths washed with either treated or untreated water as described in Example 3.

Figure 11 is a photograph of glasses contacted with either treated or untreated water at different temperatures as described in Example 4.

Figure 12 is a graphical depiction of the amount of Total Dissolved Solids (ppm), and $SiO_3$ in untreated and treated water used in a vehicle washing facility.

## DETAILED DESCRIPTION

The present invention relates to methods for treating water, such that the solubilized water hardness is reduced. According to the invention, the solubilized calcium portion of water hardness is precipitated or reduced. According to the invention, a conversion agent, which is magnesium oxide, is used to treat the water. The water treated in accordance with the methods of the present invention has many beneficial effects, including, but not limited to, reduction of scale and soiling in areas where hard water can cause soiling, protecting equipment, e.g., industrial equipment, from scale build up, increased cleaning efficacy when used with conventional detersive compositions, and reducing the need for specific chemistries, e.g., those containing threshold agents, chelating agents, or sequestrants, or phosphorous, in downstream cleaning processes.

So that the invention may be more readily understood certain terms are first defined.

As used herein, the terms "chelating agent" and "sequestrant" refer to a compound that forms a complex (soluble or not) with water hardness ions (from the wash water, soil and substrates being washed) in a specific molar ratio. Chelating agents that can form a water soluble complex include sodium tripolyphosphate, EDTA, DTPA, NTA, citrate, and the like. Sequestrants that can form an insoluble complex include sodium triphosphate, zeolite A, and the like. As used herein, the terms "chelating agent" and "sequestrant" are synonymous.

As used herein, the term "free of chelating agent" or "substantially free of chelating agent" refers to a composition, mixture, or ingredients that does not contain a chelating agent or sequestrant or to which only a limited amount of a chelating agent or sequestrant has been added. Should a chelating agent or sequestrant be present, the amount of a chelating agent or sequestrant shall be less than 7 wt%. In some embodiments, such an amount of a chelating agent or sequestrant is less than 2 wt-%. In other embodiments, such an amount of a chelating agent or sequestrant is less than 0.5 wt-%. In still yet other embodiments, such an amount of a chelating agent or sequestrant is less than 0.1 wt-%.

As used herein, the term "lacking an effective amount of chelating agent" refers to a composition, mixture, or ingredients that contains too little chelating agent or sequestrant to measurably affect the hardness of water.

As used herein, the term "conversion agent" refers to a species that causes solubilized calcium in water to substantially precipitate from solution as calcium carbonate in a form which is thought to be the thermodynamically unfavorable crystal form aragonite rather than as the thermodynamically favorable crystal form calcite. Aragonite is a fragile crystal which doesn't bind well to surfaces and doesn't form hard water scale while calcite is a more robust crystal which binds tightly to surfaces, forming a hard water scale that's not seen with aragonite.

As used herein, the term "solubilized water hardness" refers to hardness minerals dissolved in ionic form in an aqueous system or source, i.e., $Ca^{++}$ and $Mg^{++}$. Solubilized water hardness does not refer to hardness ions when they are in a precipitated state, i.e., when the solubility limit of the various compounds of calcium and magnesium in water is exceeded and those compounds precipitate as various salts such as, for example, calcium carbonate and magnesium carbonate.

As used herein, the term "water soluble" refers to a compound that can be dissolved in water at a concentration of more than 1 wt-%.

As used herein, the terms "slightly soluble" or "slightly water soluble" refer to a compound that can be dissolved in water only to a concentration of 0.1 to 1.0 wt-%.

As used herein, the term "water insoluble" refers to a compound that can be dissolved in water only to a concentration of less than 0.1 wt-%. For example, magnesium oxide is considered to be insoluble as it has a water solubility (wt %) of 0.00062 in cold water, and 0.00860 in hot water. Other insoluble compounds for use with the methods of the present invention include, for example: magnesium hydroxide with a water solubility of 0.00090 in cold water and 0.00400 in hot water; aragonite with a water solubility of 0.00153 in cold water and 0.00190 in hot water; and calcite with a water solubility of 0.00140 in cold water and 0.00180 in hot water.

As used herein, the term "threshold agent" refers to a compound that inhibits crystallization of water hardness ions from solution, but that need not form a specific complex with the water hardness ion. This distinguishes a threshold agent from a chelating agent or sequestrant. Threshold agents include a polyacrylate, a polymethacrylate, an olefin/maleic copolymer, and the like.

As used herein, the term "free of threshold agent" or "substantially free of threshold agent" refers to a composition, mixture, or ingredient that does not contain a threshold agent or to which only a limited amount of a threshold agent has been added. Should a threshold agent be present, the amount of a threshold agent shall be less than 7 wt%. In some embodiments, such an amount of a threshold agent is less than 2 wt-%. In other embodiments, such an amount of a threshold agent is less than 0.5 wt-%. In still yet other embodiments, such an amount of a threshold agent is less than 0.1 wt-%.

As used herein, the term "antiredeposition agent" refers to a compound that helps keep a soil composition suspended in water instead of redepositing onto the object being cleaned.

As used herein, the term "phosphate-free" or "substantially phosphate-free" refers to a composition, mixture, or ingredient that does not contain a phosphate or phosphate-containing compound or to which a phosphate or phosphate-containing compound has not been added. Should a phosphate or phosphate-containing compound be present through contamination of a phosphate-free composition, mixture, or ingredients, the amount of phosphate shall be less than 1.0 wt%. In some embodiments, the amount of phosphate is less than 0.5 wt %. In other embodiments, the amount of phosphate is less than 0.1 wt%. In still yet other embodiments, the amount of phosphate is less than 0.01 wt %.

As used herein, the term "phosphorus-free" or "substantially phosphorus-free" refers to a composition, mixture, or ingredient that does not contain phosphorus or a phosphorus-containing compound or to which phosphorus or a phosphorus-containing compound has not been added. Should phosphorus or a phosphorus-containing compound be present through contamination of a phosphorus-free composition, mixture, or ingredients, the amount of phosphorus shall be less than 1.0 wt%. In some embodiments, the amount of phosphorous is less than 0.5 wt %. In other embodiments, the amount of phosphorus is less than 0.1 wt%. In still yet other embodiments, the amount of phosphorus is less than 0.01 wt %.

"Cleaning" means to perform or aid in soil removal, bleaching, microbial population reduction, or combination thereof.

As used herein, the term "ware" refers to items such as eating and cooking utensils and other hard surfaces such as showers, sinks, toilets, bathtubs, countertops, windows, mirrors, transportation vehicles, and floors. As used herein, the term "warewashing" refers to washing, cleaning, or rinsing ware.

As used herein, the term "hard surface" includes showers, sinks, toilets, bathtubs, countertops, windows, mirrors, transportation vehicles, floors, and the like.

As used herein, the phrase "health care surface" refers to a surface of an instrument, a device, a cart, a cage, furniture, a structure, a building, or the like that is employed as part of a health care activity. Examples of health care surfaces include surfaces of medical or dental instruments, of medical or dental devices, of autoclaves and sterilizers, of electronic apparatus employed for monitoring patient health, and of floors, walls, or fixtures of structures in which health care occurs. Health care surfaces are found in hospital, surgical, infirmity, birthing, mortuary, and clinical diagnosis rooms. These surfaces can be those typified as "hard surfaces" (such as walls, floors, bed-pans, etc.,), or fabric surfaces, e.g., knit, woven, and non-woven surfaces (such as surgical garments, draperies, bed linens, bandages, etc.,), or patient-care equipment (such as respirators, diagnostic equipment, shunts, body scopes, wheel chairs, beds, etc.,), or surgical and diagnostic equipment. Health care surfaces include articles and surfaces employed in animal health care.

As used herein, the term "instrument" refers to the various medical or dental instruments or devices that can benefit from cleaning using water treated according to the methods of the present invention.

As used herein, the phrases "medical instrument," "dental instrument," "medical device," "dental device," "medical equipment," or "dental equipment" refer to instruments, devices, tools, appliances, apparatus, and equipment used in medicine or dentistry. Such instruments, devices, and equipment can be cold sterilized, soaked or washed and then heat sterilized, or otherwise benefit from cleaning using water treated according to the present invention. These various instruments, devices and equipment include, but are not limited to: diagnostic instruments, trays, pans, holders, racks, forceps, scissors, shears, saws (e.g. bone saws and their blades), hemostats, knives, chisels, rongeurs, files, nippers, drills, drill bits, rasps, burrs, spreaders, breakers, elevators, clamps, needle holders, carriers, clips, hooks, gouges, curettes, retractors, straightener, punches, extractors, scoops, keratomes, spatulas, expressors, trocars, dilators, cages, glassware, tubing, catheters, cannulas, plugs, stents, scopes (e.g., endoscopes, stethoscopes, and arthoscopes) and related equipment, and the like, or combinations thereof.

As used herein, "weight percent (wt-%)," "percent by weight," "% by weight," and the like are synonyms that refer to the concentration of a substance as the weight of that substance divided by the total weight of the composition and multiplied by 100.

Compositions and Methods of Use

The present invention provides methods for treating water, comprising reducing the solubilized water hardness. According to the invention, the solubilized calcium portion of water hardness is reduced. According to the invention, the water is contacted with a composition comprising a conversion agent. Described herein are also methods for inhibiting or reducing scale formation in an aqueous system comprising contacting the aqueous system with a composition comprising a conversion agent. The conversion agent may be in any form, e.g., solid, particle, liquid, powder, nanoparticle, slurry, suitable for use with the methods of the present invention. Optionally, a solid source of a conversion agent is used.

Without wishing to be bound by any particular theory, it is thought that the conversion agents for use with the methods described herein cause solubilized calcium water hardness ions in water to substantially precipitate via an interfacial reaction from solution as calcium carbonate in the thermodynamically unfavorable crystal form aragonite rather than as the thermodynamically favorable crystal form calcite. Aragonite is a fragile crystal which doesn't bind well to surfaces and doesn't form hard water scale while calcite is a more robust crystal which binds tightly to surfaces, forming a hard water scale that's not seen with aragonite. Thus, contacting water with a conversion agent described herein reduces the solubilized water hardness of the treated water, and leads to a reduction in scale formation on a surface in contact with the treated water. The aragonite crystals can also act as seed crystals for further reduction of solubilized calcium after contacting the conversion agent.

*Conversion agents*

According to the invention, magnesium oxide is used as a conversion agent to treat water. In some embodiments, low solubility is preferred for longer conversion agent activity.

In some embodiments, water contacted with a conversion agent forms a calcium precipitate. The calcium precipitate formed using the methods of the present invention is such that the precipitate flows through the water source harmlessly. That is, in some embodiments, unlike conventional water treatment systems, there is not a need to filter or remove the precipitate from the treated water.

The conversion agent used with the methods of the present invention is in solid form. By the term "solid" as used to describe the conversion agent composition, it is meant that the hardened composition will not flow perceptibly and will substantially retain its shape under moderate stress or pressure or mere gravity, as for example, the shape of a mold when removed from the mold, the shape of an article as formed upon extrusion from an extruder, and the like. The degree of hardness of the solid composition can range from that of a fused solid block which is relatively dense and hard, for example, like concrete, to a consistency characterized as being malleable and sponge-like, similar to caulking material.

*Water source*

The methods of the present invention comprise treating a water source such that the solubilized hardness of the water is reduced. The term "water source" as used herein, refers to any source of water having a hardness that would be benefited by treatment in accordance with the methods of the present invention. Exemplary water sources suitable for treatment using the methods of the present invention include, but are not limited to, water from a municipal water source, or private water system, e.g., a public water supply or a well. The water can be city water, well water, water supplied by a municipal water system, water supplied by a private water system, and/or water directly from the system or well. In some embodiments, the water source is not an industrial process water, e.g., water produced from a bitumen recovery operation. In other embodiments, the water source is not a waste water stream.

According to the invention, the water source has a pH of 6 to 9 prior to treatment using the methods of the present invention. In some embodiments, the water source will have a higher, i.e., more alkaline, pH after treatment in accordance with the methods of the present invention.

The present invention provides methods for reducing solubilized water hardness comprising contacting a water source with a composition comprising a conversion agent. The step of contacting includes passing the water through a media bed of magnesium oxide particles, the media being held in a tank. The contact time is dependent on a variety of factors, including, for example, the pH of the water source, the hardness of the water source, and the temperature of the water source. In some embodiments, the water source has a contact time of between 30 seconds and 6000 seconds with the source of conversion agent. In some embodiments, the water source has a contact time of between 120 seconds and 1800 seconds with the source of conversion agent. It still yet other embodiments, the water source has a contact time of between 200 seconds and 1200 seconds with the source of conversion agent.

The methods of the present invention substantially reduce the solubilized hardness of the water source. The amount of water hardness reduction achieved is dependent on a variety of factors, including, but not limited to the pH of the water source, the temperature of the water source, and the initial water hardness.

For example, in some embodiments the solubilized water hardness is reduced by 25%. In some embodiments, the solubilized water hardness is reduced by 50%. In still yet other embodiments, the solubilized water hardness is reduced by 75%. In still yet other embodiments, the solubilized water hardness is reduced by 90%.

Described herein are also methods for reducing or inhibiting scale formation in an aqueous system. An aqueous system, i.e., a water source, is contacted with a conversion agent, e.g., a metal oxide or hydroxide. Without wishing to be bound by any particular theory, it is thought, that the resulting treated aqueous system will have a reduced solubilized hardness. The resulting treated aqueous system will have a reduced solubilized calcium hardness. This reduction in hardness will reduce the amount of scale formed on surfaces contacted by the water source. Thus, use of a water source treated as described herein will inhibit or reduce the amount of water scale formed on a surface.

For example, the amount of scale formation is reduced by 25%, by 50%, by 80%, or by 100%.

The methods described herein are especially effective at removing or preventing scale formation wherein the scale comprises calcium salts, e.g., calcium phosphate, calcium oxalate, calcium carbonate, calcium bicarbonate or calcium silicate. The scale which is intended to be prevented or removed by the methods described herein may be formed by any combination of the above-noted ions. For example, the scale may involve a combination of calcium carbonate and calcium bicarbonate. The scale typically comprises at least 90 wt % of inorganic material, more typically at least 95 wt % of inorganic material, and most typically at least 99 wt % of inorganic material.

*Methods of Using a Treated Water Source in a Downstream Cleaning Process*

Described herein is also a method of using a treated water source to clean an article. It has been found that use of a treated water source has many advantages in downstream cleaning processes compared to use of a non-treated water source. For example, use of a water source treated in accordance with the methods of the present invention increases the efficacy of conventional detergents. Use of a treated water source also allows for the use of specific environmentally friendly detersive compositions, e.g., those free of chelants or sequestrants, or phosphorous.

The methods described herein comprise treating a water source with a composition comprising a conversion agent, wherein the conversion agent causes calcium hardness ions in the water source to substantially precipitate in a non-calcite crystalline form that does not need to be removed from the water source, such that the solubilized hardness of the water is substantially reduced. A use solution can then be formed with the treated water and a detersive composition. The article or articles to be cleaned are then contacted with the use solution, such that the article(s) is cleaned.

Optionally, the method further comprises rinsing the article. The article can be rinsed with treated water, or with untreated water. Optionally, the article is rinsed using treated water. A rinse aid can also be applied to the article after it has been washed.

Any conventional detersive composition can be used with the methods described herein. The detersive composition can comprise a cleaning composition, a rinse agent composition, a drying composition or any combination thereof. Without wishing to be bound by any particular theory, it is thought that use of a treated water source in a cleaning process increases the efficacy of the detersive composition due to the reduced amount of solubilized hardness minerals in the water source, e.g., solubilized calcium hardness ions. It is known that solubilized hardness ions combine with soap and detergents to form a scale or scum. Further, solubilized hardness ions limit the amount of lather formed with soaps and detergents. Reducing the amount of these solubilized hardness ions can therefore reduce the amount of these detrimental side effects.

Detersive compositions for use with the methods described herein can include, but are not limited to, detergent compositions, rinse agent compositions, or drying agent compositions. Exemplary detergent compositions include warewashing detergent compositions, laundry detergent compositions, CIP detergent compositions, environmental cleaning compositions, hard surface cleaning compositions (such as those for use on counters or floors), motor vehicle washing compositions, and glass cleaning compositions. Exemplary rinse agent compositions include those compositions used to reduce streaking or filming on a surface such as glass. Exemplary drying agent compositions include dewatering compositions. In the vehicle washing industry, it is often desirable to include a dewatering step where a sheeting or beading agent is applied to the vehicle exterior.

Exemplary articles that can be treated, i.e., cleaned, with the use solution comprising a detersive composition and treated water include, but are not limited to motor vehicle exteriors, textiles, food contacting articles, clean-in-place (CIP) equipment, health care surfaces and hard surfaces. Exemplary motor vehicle exteriors include cars, trucks, trailers, buses, etc. that are commonly washed in commercial vehicle washing facilities. Exemplary textiles include, but are not limited to, those textiles that generally are considered within the term "laundry" and include clothes, towels, sheets, etc. In addition, textiles include curtains. Exemplary food contacting articles include, but are not limited to, dishes, glasses, eating utensils, bowls, cooking articles, food storage articles, etc. Exemplary CIP equipment includes, but is not limited to, pipes, tanks, heat exchangers, valves, distribution circuits, pumps, etc. Exemplary health care surfaces include, but are not limited to, surfaces of medical or dental devices or instruments. Exemplary hard surfaces include, but are not limited to, floors, counters, glass, walls, etc. Hard surfaces can also include the inside of dish machines, and laundry machines. In general, hard surfaces can include those surfaces commonly referred to in the cleaning industry as environmental surfaces.

Optionally, the detersive composition for use with the methods described herein comprises a detergent that is substantially free of a chelant sequestrant, and/or threshold agent, e.g., an aminocarboxylic acid, a condensed phosphate, a phosphonate, a polyacrylate, or the like. Without wishing to be bound by any particular theory, it is thought that because the methods of the present invention substantially reduce the solubilized hardness ions in the water source, when the water source is used with a detergent, there is a substantially reduced or eliminated need to include chelating agents, sequestrants, or threshold agents in the detergent composition in order to handle the hardness ions.

Optionally, the detergent for use with the methods described herein is substantially free of a chelating agent or sequestrant and comprises an insoluble magnesium compound, an alkali metal carbonate, and water.

Optionally, the detersive composition may include other additives, including conventional additives such as bleaching agents, hardening agents or solubility modifiers, defoamers, anti-redeposition agents, threshold agents, stabilizers, dispersants, enzymes, surfactants, aesthetic enhancing agents (i.e., dye, perfume), and the like. Adjuvants and other additive ingredients will vary according to the type of composition being manufactured. It should be understood that these additives are optional and need not be included in the cleaning composition. When they are included, they can be included in an amount that provides for the effectiveness of the particular type of component.

Described herein is also an apparatus for treating a water source used in a cleaning or washing process. The apparatus can be, for example, for use in an automatic warewashing machine, an automatic textile washing machine, and/or an automatic vehicle washing machine. The apparatus can be used both in commercial settings, e.g., at a restaurant, a hospital, and in residential settings, e.g., a private home, or apartment building.

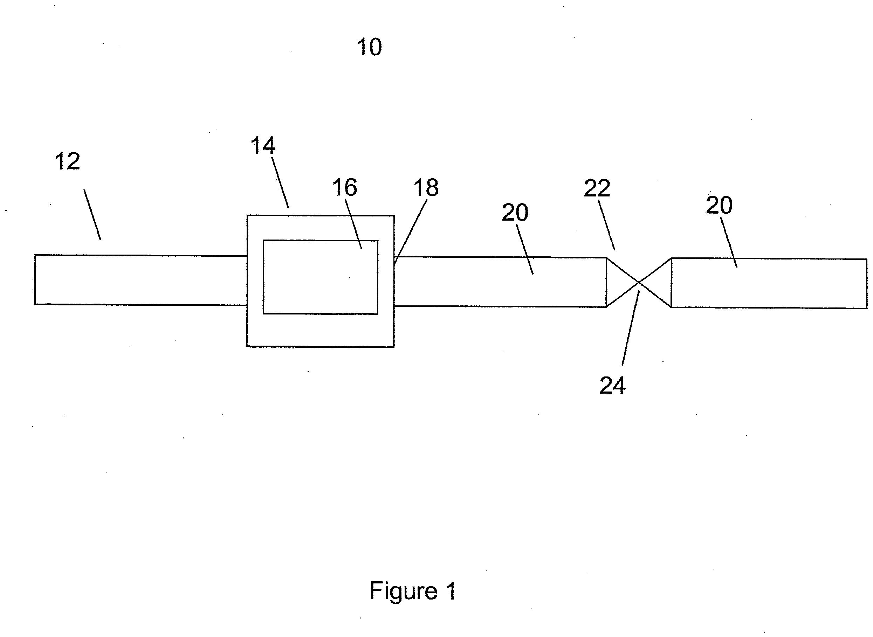

Referring to Figure 1, a schematic of an apparatus described herein is shown at reference 10. The apparatus comprises: an inlet 12 for providing the water source to a treatment reservoir 14; a treatment reservoir 14 comprising a conversion agent 16; an outlet 18 for providing treated water from the treatment reservoir; and a treated water delivery line 20 for providing the treated water to the selected cleaning device. Optionally, there is no filter between the outlet and the treated water delivery line. A flow control device 22 such as a valve 24 can be provided in the treated water delivery line 18 to control the flow of the treated water into the selected end use device, e.g., a warewashing machine, a laundry washing machine.

Optionally, the conversion agent is contained in a treatment reservoir in the apparatus. The reservoir can be for example, a tank, a cartridge, a filter bed of various physical shapes or sizes, or a column. Optionally, the treatment reservoir comprising a conversion agent is resin free, i.e., it does not contain a material that contains univalent hydrogen, sodium or potassium ions, which exchange with divalent calcium and magnesium ions in the water source. Optionally, the reservoir is pressurized. Otherwise, the reservoir is not pressurized. One reservoir or multiple reservoirs may be used with the methods described herein. For example, the water source may be passed over a plurality of reservoirs, in the same or in separate containers, comprising the same or different conversion agents. The reservoirs may be arranged in series or in parallel.

Optionally, the conversion agent is in the form of an agitated bed or column. The bed or column may be agitated to avoid "cementing," i.e., agglomeration of the solid conversion agent once contacted with the water source. The bed or column can be agitated by any known method including, for example, by the flow of water through the column, fluidization, mechanical agitation, high flow backwash, recirculation, and combinations thereof. Optionally, the solid conversion agent comprises a fluidized bed, e.g., a column or a cartridge, in the treatment reservoir. Fluidization is obtained by an increase in the velocity of the fluid, e.g., water, passing through the bed such that it is in excess of the minimum fluidization velocity of the media.

Optionally, the entire treatment reservoir can be removable and replaceable. Optionally, the treatment reservoir can be configured such that the bed of conversion agent contained within the treatment reservoir is removable and replaceable. Optionally, the treatment reservoir comprises a removable, portable, exchangeable cartridge comprising a conversion agent, e.g., magnesium oxide.

Described herein is also a system for use in a cleaning process. The system comprises providing a water source to an apparatus for treating the water source. Optionally, the apparatus for treating the water source comprises: (i) an inlet for providing the water source to a treatment reservoir; (ii) a treatment reservoir comprising a conversion agent; (iii) an outlet for providing treated water from the treatment reservoir; and (iv) a treated water delivery line for providing the treated water to the automatic warewashing machine. Optionally, a device, e.g., a screen, is present in the treatment reservoir in order to keep the conversion agent contained within the treatment reservoir as the fluid is passing over or through it. Optionally, there is no filter between the outlet and the treated water delivery line. Once the water has been treated, the treated water is provided to an automatic washing machine, e.g., an automatic ware washing machine, a vehicle washing system, an instrument washer, a clean in place system, a food processing cleaning system, a bottle washer, and an automatic laundry washing machine, from the treated water delivery line of the apparatus. Any automatic washing machine that would benefit from the use of water treated in accordance with the methods of the present invention can be used. The treated water is then combined with a detersive composition in the washing machine to provide a use composition. Any detersive composition can be used in the system of the present invention, for example, a cleaning composition, a rinse agent composition or a drying agent composition. The articles to be cleaned are then contacted with the use solution in the automatic washing machine such that they are cleaned.

The water treatment methods and systems described herein can be used in a variety of industrial and domestic applications. The water treatment methods and systems can be employed in a residential setting or in a commercial setting, e.g., in a restaurant, hotel, hospital. For example, a water treatment method, system, or apparatus described herein can be used in: ware washing applications, e.g., washing eating and cooking utensils and other hard surfaces such as showers, sinks, toilets, bathtubs, countertops, windows, mirrors, and floors; in laundry applications, e.g., to treat water used in an automatic textile washing machine at the pre-treatment, washing, souring, softening, and/or rinsing stages; in vehicle care applications, e.g., to treat water used for pre-rinsing, e.g., an alkaline presoak and/or low pH presoak, washing, polishing, and rinsing a vehicle; industrial applications, e.g., cooling towers, boilers, industrial equipment comprising heat exchangers; in food service applications, e.g., to treat water lines for coffee and tea brewers, espresso machines, ice machines, pasta cookers, water heaters, steamers and/or proofers; in healthcare instrument care applications, e.g., soaking, cleaning, and/or rinsing surgical instruments, treating feedwater to autoclave sterilizers; and in feedwater for various applications such as humidifiers, hot tubs, and swimming pools

Optionally, the water treatment methods and systems described herein can be applied at the point of use. That is, a water treatment method, system, or apparatus described herein can be applied to a water source immediately prior to the desired end use of the water source. For example, an apparatus described herein could be employed to a water line connected to a household or restaurant appliance, e.g., a coffee maker, an espresso machine, an ice machine. An apparatus employing the methods of the present invention can also be included as part of an appliance which uses a water source, e.g., a water treatment system built into a coffee maker, or ice machine.

Additionally, an apparatus for employing the water treatment methods of the present invention can be connected to the water main of a house or business. The apparatus can be employed in line before the hot water heater, or after the hot water heater. Thus, an apparatus described herein can be used to reduce solubilized water hardness in hot, cold and room temperature water sources.

## EXAMPLES

The present invention is more particularly described in the following examples. Unless otherwise noted, all parts, percentages, and ratios reported in the following examples are on a weight basis, and all reagents used in the examples were obtained, or are available, from the chemical suppliers described below, or may be synthesized by conventional techniques.

*Example 1- Water Treatment with a Conversion Agent Comprising Low Water Soluble Magnesium Media*

The following experiments were performed to evaluate the effect of various conversion agents on water hardness, and ware washing applications.

*(a, inventive) Ability of a Conversion Agent Comprising a Solid Source of Magnesium Oxide to Reduce Solubilized Water Hardness*

The ability of a conversion agent comprising a solid source of insoluble magnesium oxide to treat water, e.g., reduce solubilized water hardness was evaluated. For this experiment water was passed through a media bed of magnesium oxide particles. The particles had an average size of 900 microns. The media was held in a tank.

The amount of calcium and magnesium ions in the water was measured before and after passing over the bed comprising the conversion agent. The total dissolved solids (TDS), water hardness, and pH were also measured both before and after treatment. The table below summarizes the results.

Table 1.

|  | Before Treatment | After Treatment |
|---|---|---|
| pH | 7.6 | 9.3 |
| TDS (ppm) | 360.5 | 201.4 |
| Water Hardness (grains) | 18 | 12 |
| $Ca^{++}$ ions present (ppm) | 66 | 9 |
| $Mg^{++}$ ions present (ppm) | 28 | 48 |

As can be seen from this table, the pH of the treated water rose slightly after treatment. Without wishing to be bound by any particular theory, it is thought that this is due to the magnesium oxide in the media bed dissolving into $Mg^{++}$ and $OH^-$ once contacted by the water. It was also observed that the total solubilized water hardness decreased by 35%, and the total solubilized $Ca^{++}$ decreased by 86%. Overall, it was observed that the treatment of a water source with the solid conversion agent, i.e., magnesium oxide, provided beneficial effects, e.g., reduced solubilized water hardness, and reduced amounts of total dissolved solids, to the treated water source.

*(b, comparative) Addition of Calcite to a Conversion Agent*

Another test was run to determine the effect of adding calcite to the media bed comprising the conversion agent, i.e., magnesium oxide. It was theorized that the calcite would prevent "cementing" of the magnesium oxide during use over time, as magnesium oxide is known to agglomerate and form a solid mass. The amount of magnesium ions and calcium ions in the treated water were measured after treatment with various concentrations of magnesium oxide and calcium. The table below summarizes the results.

Table 2.

| Percent Make-Up in Treatment Tank (%) | | | | | |
|---|---|---|---|---|---|
| MgO/Calcite | 100/0 | 75/25 | 50/50 | 25/75 | 0/100 |
| Treated Water Composition | | | | | |
| $Mg^{++}$(ppm) | 48.3 | 45.3 | 39.0 | 36.8 | 26.0 |
| $Ca^{++}$(ppm) | 8.96 | 13.5 | 25.1 | 37.3 | 63.9 |

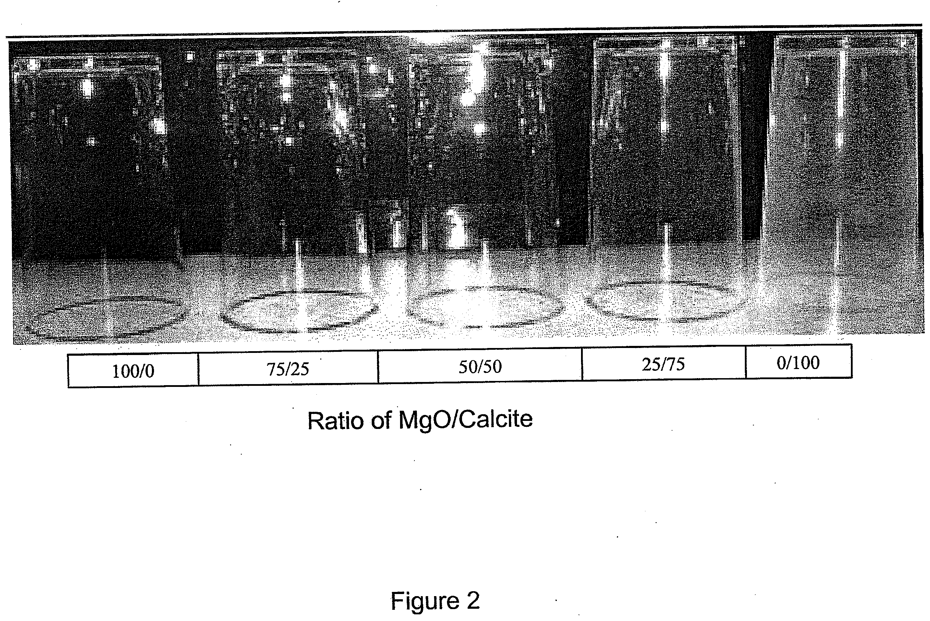

Drinking glasses were also washed in a ware washing machine using water treated with the above MgO/Calcite formulations. After 100 cycles the glasses were evaluated for spotting and filming, although filming was taken to be a more reliable indicator of glass appearance in the test. Heavily filmed glasses do not show spots well because a heavy film prevents appearance of spots. Figure 2 shows the glasses treated in this experiment. It was observed that the glasses washed with the water comprising 100% MgO and no calcite had little to no spotting. It was observed that the amount of spotting and filming increased on the glasses as the amount of MgO used decreased, and the amount of calcite increased.

*(c, for reference only) Addition of a Conversion Agent During a Ware Washing Process*

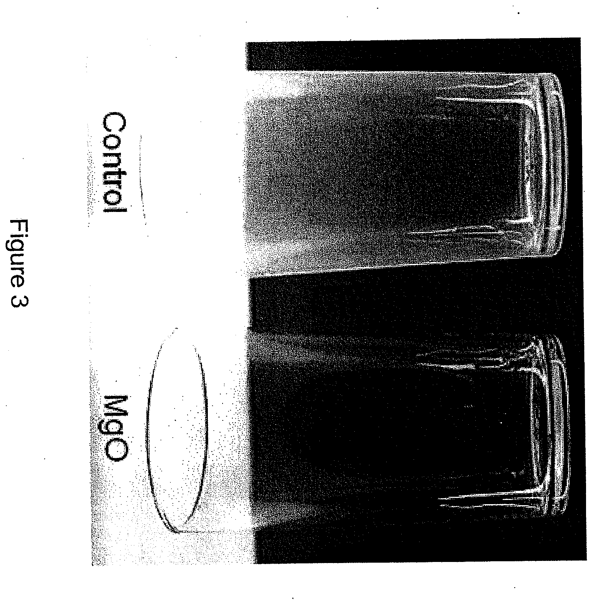

Another ware washing test on drinking glasses was run using a tank comprising a conversion agent, i.e., magnesium oxide, and no calcite. For this test, a Hobart AM-14 automatic ware washing machine was used. The water prior to treatment had a hardness of 17 grains. The magnesium oxide treated water was supplied before the sump in the machine, thereby also having an effect during the rinse cycle. No detergent or rinse aid was applied to the glasses. As a control, a glass was washed for 100 cycles with untreated water. After 100 cycles the glasses were evaluated for spotting and filming. Figure 3 shows the results of this experiment. It was observed that the glass ware treated with water and a conversion agent had no filming or scaling, unlike the control glass which had substantial filming and spotting.

*(d, for reference only) Addition of a Conversion Agent During a Ware Washing Process with Detergent Formulations with and without a Chelant or Sequestrant*

A water treatment system comprising a solid source of a conversion agent was attached to an automatic ware washing system. The conversion agent used in this study comprised magnesium oxide. For this test, a Hobart AM-14 machine was used. The water prior to treatment had a hardness of 17 grains.

Two detergent formulations were tested. The first comprised 1000ppm of a commercially available detergent with 35% chelant, Apex Power®, available from Ecolab Inc. A rinse aid was applied after the glasses were washed with this detergent.

The second detergent was free of a chelant or sequestering agent, and comprised 32% NaOH, 35% RU silicate (a sodium silicate available from Philadelphia Quartz), 0.6% polyether siloxane , 2% Pluronic N3® (a copolymer available from BASF), 1% of a nonionic defoaming agent, 9.5% soda ash, 12% sodium sulfate, and 1% water. 650ppm of the chelant free detergent was used. No rinse aid was used with the chelant free detergent. The glasses were washed with either formulation for 100 cycles.

The glasses washed with the chelant free detergent were washed using water treated with a conversion agent of the present invention, i.e., magnesium oxide. The glasses washed with the commercially available detergent comprising a builder, i.e., Apex Power®, were washed using untreated water.

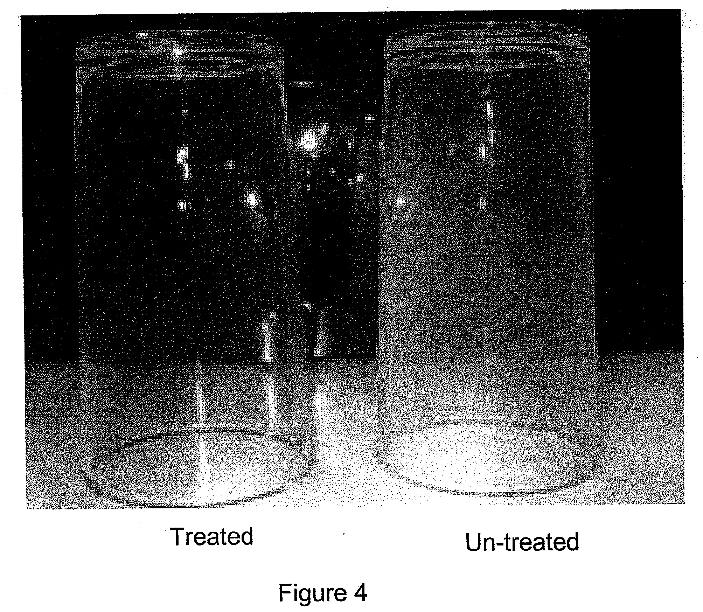

Figure 4 shows the glasses after completion of the 100 cycle test. As can be seen from this figure, the glass washed using a chelant free detergent and treated water, had substantially less filming and spotting than the glasses washed with Apex Power® and a rinse aid, but with untreated water. Further, it was observed that after the 100 cycles were completed, the inside of the machine used with the chelant free detergent and the treated water visually looked better than the machine used with the Apex Power® and the untreated water.

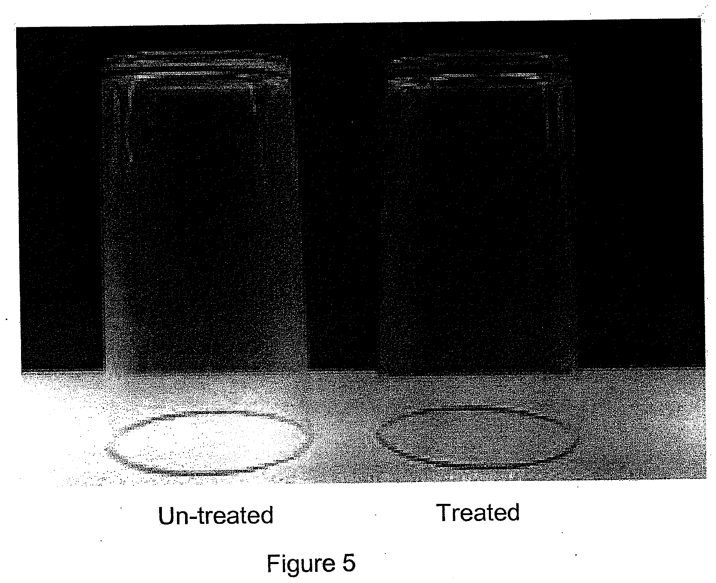

This test was repeated, however, a rinse aid was added after the wash cycle. 2.33 mL of the rinse aid was added per cycle. Figure 5 shows the glasses after washing with each formulation. As can be seen in this figure, when a rinse aid was added, both glasses had an improved visual appearance. However, the glass treated with the chelant free detergent, and the treated water, still had substantially less spotting and filming than the glass washed with untreated water, and Apex Power®.

The same test was performed, this time using soiled glassware. Glasses were soiled with 100% whole milk and a dried protein/starch/grease combined soil. Soiled glasses were washed for 10 cycles, as described above, with either Apex Power®, or the chelant free detergent composition described above. The glasses were re-soiled between each cleaning cycle with additional starch and protein soil. The glasses washed with Apex® were washed with untreated water, and the glasses washed with the chelant free detergent were washed with water treated with a conversion agent, i.e., magnesium oxide.

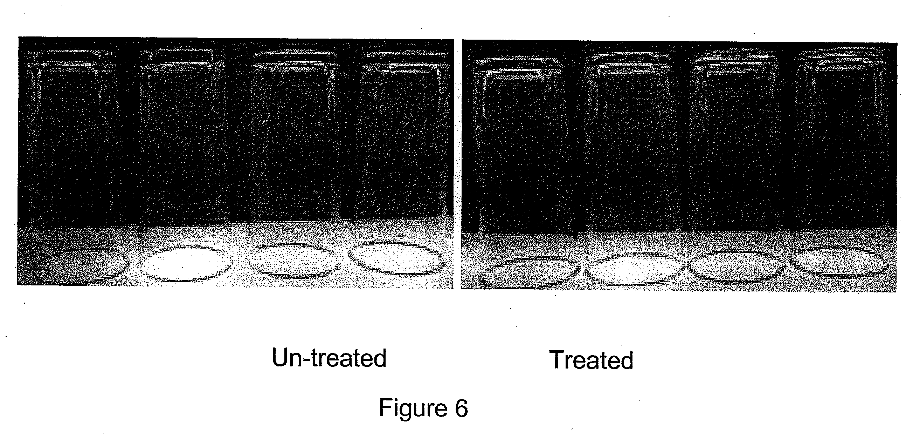

The results are shown in Figure 6. As can be seen from this figure, the glasses washed with the chelant free detergent and the treated water had less spotting and filming than those washed using Apex Power®. It was also observed that the glasses washed with Apex Power® and untreated water had a slightly bluish tint, and those washed with the treated water had no visual blue spotting.

*Example 2 (comparative)- Effect of Various Metal Oxides and Salts on Hard Water*

A variety of tests were run to determine the effect various metal oxides and salts have on water hardness.

*(a) Effect of Various Metal Complexes on Hard Water*

The following test was run to determine the effect of various metal complexes, i.e., oxides, carbonates, and hydroxides, with or without calcite or aragonite, on water hardness. The starting water had a hardness of 23 grains. Different metal complexes were added to the water, and the hardness of the water was measured thereafter. For these experiments, 216g of treatment agent was added to a beaker containing 500mL of hard water. After stirring the contents the beaker for 20 minutes, an aliquot was removed and filtered through a 0.2 micron syringe filter to remove any suspended particulate. Then the filtered sample was titrated for total water hardness ($Ca^{++}$ and $Mg^{++}$) using a water test kit. The following table summarizes the results. Table 3.

| Treatment | Water Hardness after treatment (grains) |
| --- | --- |
| starting water | 23 |
| alum. oxide | 6 |
| alum. oxide + aragonite | 8 |
| alum. oxide + calcite | 4 |
| | |
| iron oxide | 24 |
| iron oxide + aragonite | 26 |
| iron oxide + calcite | 24 |
| mag. carbonate | 24 |
| mag. carbonate + aragonite | 50 |
| mag. carbonate + calcite | 23 |
| mag. hydroxide + aragonite | 26 |

(continued)

| Treatment | Water Hardness after treatment (grains) |
|---|---|
| mag. oxide | 8 |
| titanium oxide | 3 |
| titanium oxide + aragonite | 12 |
| titanium oxide + calcite | 9 |
| zinc oxide | 23 |
| zinc oxide + aragonite | 22 |
| zinc oxide + calcite | 23 |

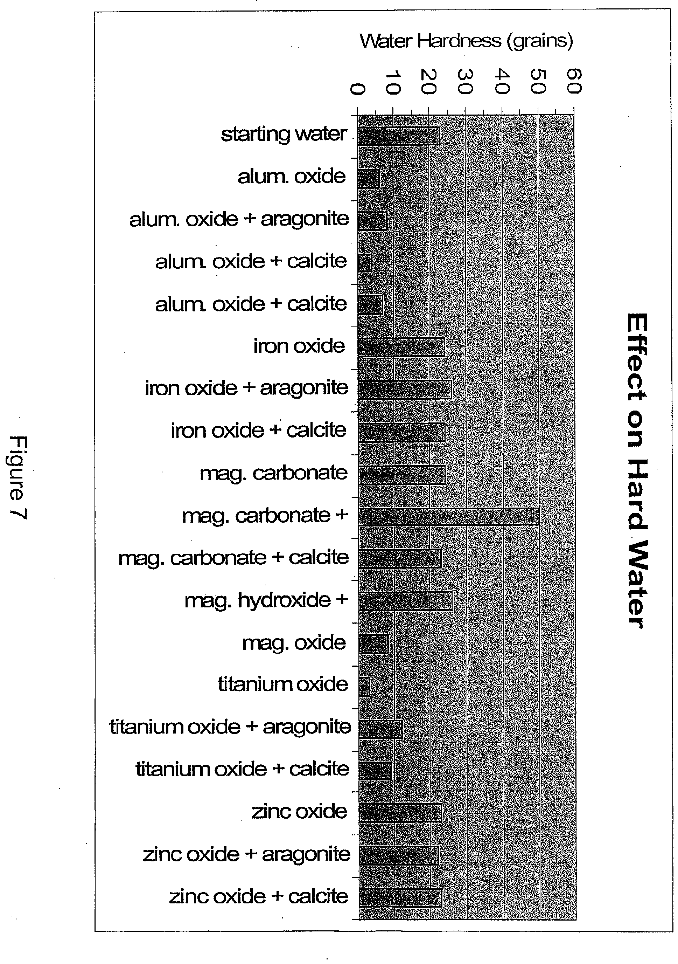

These results are also graphically depicted in Figure 7. As can be seen from the table above, and Figure 7, addition of aluminum oxide, magnesium oxide, or titanium oxide reduced the water hardness more than the other metal oxides tested. For example, the addition of aluminum oxide resulted in more than a 70% reduction in the water hardness, the addition of titanium oxide resulted in more than an 80% reduction in water hardness, and the addition of magnesium oxide resulted in more than a 60% reduction in water hardness.

It was also found that the addition of aragonite and calcite with a metal oxide did not increase the reduction in the water hardness as much when aluminum oxide, magnesium oxide or titanium oxide was added to the water alone. However, the use of aluminum oxide, titanium oxide or magnesium oxide with calcite or aragonite still reduced the water hardness more than the other metal oxides tested, i.e., iron oxide, and zinc oxide.

*(b) Evaluation of Potential Water Softening Agents by Wetting Effect Change*

Various metal oxides, hydroxides, and salts were tested to determine their ability to act as water softeners. Solutions of 1000ppm of the various compositions were prepared. Smooth ceramic tiles were rinsed with the solutions and wiped dry. The contact angle of deionized water on the surface of the tiles was measured. The tiles were then rinsed under 17 grain water hardness, dried, and the contact angle was re-measured. The results are shown in the table below.

Table 4.

| Treatment | before hard water rinse | after hard water rinse | ratio after/before hard water rinse |
|---|---|---|---|
| 0.1% titanium oxide | 24 | 17 | 0.7 |
| 0.1% aluminum oxide | 26 | 19 | 0.7 |
| 1% magnesium oxide | 18 | 15 | 0.8 |
| 1% magnesium oxide nanoparticles | 18 | 15 | 0.8 |
| 1% magnesium hydroxide | 22 | 19 | 0.9 |
| 0.001% magnesium hydroxide | 23, 17, 25 | 15 | 0.7 |
| 0.001% magnesium hydroxide magnesium hydroxide | 13, 18, 18 | 15 | 0.9 |
| 0.1% magnesium hydroxide | 18, 16 | 16, 18 | 0.9, 1.1 |
| untreated | 37, 36 | 48 | 1.3 |
| 0.1% magnesium chloride | 21 | 28 | 1.3 |
| 0.1% zinc oxide | 16 | 22 | 1.4 |
| 0.1% calcium chloride | 20 | 35 | 1.8 |
| 0.1% magnesium sulfate | 11 | 24 | 2.2 |
| 0.1% silicon oxide nanoparticles (Snowtex N, Nissan Chemical) | 9 | 23 | 2.6 |

(continued)

| Treatment | before hard water rinse | after hard water rinse | ratio after/before hard water rinse |
|---|---|---|---|
| 0.1% silicon oxide nanoparticles (Snowtex 40, Nissan Chemical) | 10 | 26 | 2.6 |
| 0.1% silicon oxide nanoparticles (Snowtex ZL, Nissan Chemical) | 6 | 22 | 3.7 |
| 0.1 % sodium hydroxide | 2 | 21 | 10.5 |

It was theorized that a lower ratio of the contact angle of water before and after hard water rinsing of the substrate correlates to improved protection of the substrate from the hard water as it shows less impact of water hardness ions on the surface wetting. As can be seen from this table, the ratio of the contact angle after/before the hard water rinse was 1 or less for the titanium oxide, aluminum oxide, and the magnesium oxide and hydroxide solutions tested. Based on these results, it was theorized that these solutions would likely soften water. The silicon oxide nanoparticles and sodium hydroxide had the highest change in contact angle.

*(c) Evaluation of Potential Water Softening Agents by Calcium Selective Electrode*

Various metal oxides, hydroxides, and salts were tested to determine their ability to act as water softeners. Solutions of the various compositions were prepared. To prepare the solutions, equal volumes of the treatment were mixed with 17 grain hard water which is 400ppm water hardness. The mixtures were allowed to stand for 10 minutes. An aliquot was removed and filtered through a 0.2 micron syringe filter to remove any non-solubilized material. The level of dissolved calcium remaining in solution was determined using a calcium selective electrode (e.g., model 9720BNWP from ThermoScientific). The table below shows the results of this test.

Table 5.

| Treatment | Ca Remaining from 400ppm Starting Solution (ppm) |
|---|---|
| | |
| untreated | 400 |
| calcite | 300 |
| aragonite | 275 |
| dolomite | 300 |
| magnesium oxide | 275 |
| magnesium hydroxide | 275 |
| aluminum oxide | 150 |
| iron oxide | 300 |
| silicon oxide | 300 |
| titanium oxide | 250 |
| clay (sodium/magnesium/calcium aluminosilicate)* | 50 |
| *turned to gel; measured Ca level after filtration with a 0.2 micron filter. | |

As can be seen from this table, the solutions treated with magnesium oxide and hydroxide, aluminum oxide, and titanium oxide yielded the greatest reduction in the amount of calcium remaining in the solution after treatment. The iron oxide and silicon oxide decreased the amount of calcium remaining in the solution, at a lower level than the other metal oxides tested.

*Example 3 (for reference only)- Use of a Conversion Agent in a Laundry Application*

The effect of an inline conversion agent in a laundry application was determined. To determine the effect of the conversion agent on soil removal, soiled swatches are washed in a device such as a Terg-o-tometer (United States Testing Co., Hoboken, N.J.). The Terg-o-tometer is a laboratory washing device that consists of multiple pots that reside in a single temperature-controlled water bath, with overhead agitators under time and speed control. Wash test parameters include: wash temperature, wash duration, pH, mechanical agitation, dose of cleaning composition, water hardness, wash formula, and cloth/liquor ratio. For this test, a pair of cylinders comprising a conversion agent, i.e., magnesium oxide, was mounted inline, upstream of a wash wheel in both hot and cold 17 grain water lines.

After completing the appropriate exposure times the fabric samples were removed. The detergent chemistries were immediately flushed, and the swatches rinsed with cold synthetic 5 grain water until 5 cycles of fills and rinses are complete. The swatches were then laid flat and dried overnight on white polyester-cotton towels before reflectance readings were taken using a spectrophotometer, e.g., Hunter ColorQuest XE (reflectance) Spectrophotometer.

To determine the % soil removal (SR), the reflectance of the fabric sample is measured on a spectrophotometer. The "L value" is a direct reading supplied by the spectrophotometer. L generally is indicative of broad visible spectrum reflectance, where a value of 100% would be absolute white. The % soil removal is calculated from the difference between the initial (before washing) lightness (L) value and the final L value (after washing):

$$SR = ((L_{final} - L_{initial})/(96 - L_{initial})) \times 100\%$$

Two detergent compositions were used in this study. The first comprised a mixture of chelant/sequestrant i.e., polyacrylate polymer and sodium citrate, and the second was substantially free of any chelant/sequestrant. Other than the presence or absence of a chelant or sequestrant, the two detergent compositions were equivalent and comprised 3-75 wt% surfactant (if present), 5-50 wt% sequestrant (if present), 0-50 wt% alkalinity source and 0-30wt% of an active enzyme composition.

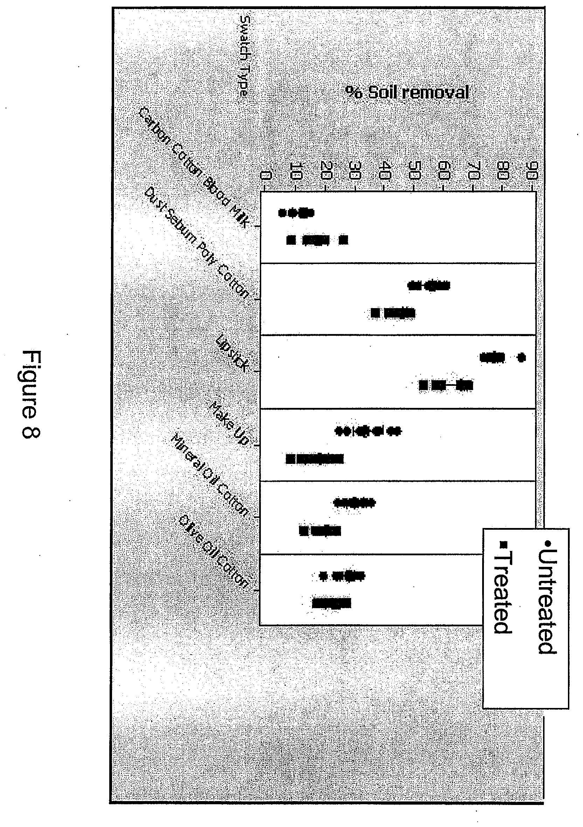

The detergent composition with no chelant or sequestrant was used with treated water, i.e., water contacted with the conversion agent, and the detergent with the chelant/sequestrant mixture was used with untreated water. The results are shown in Figure 8. As can be seen in this figure, the treated water/chelant free detergent composition had a higher percent soil removal for the carbon cotton blood milk soiled swatch. For the other swatches tested, the detergent comprising a chelant/sequestrant used with untreated water had a higher percent soil removal than the treated water/chelant free detergent composition. However, for most of the soils tested, the results were similar between both test groups.

Another test was run to evaluate the encrustation of linens when using a conversion agent of the present invention. For this test, face cloths were washed for 20 cycles in the wash wheel using 17 grain water. Single face cloths were removed for analysis at 0, 5, 15, and 20 cycles. Two tests were run. For both tests, the chelant/sequestrant free detergent described above was used. The first test included an inline cylinder comprising a conversion agent, and the second test used untreated water. The amount of total ash and calcium content for the wash cloths were measured using Inductively Coupled Plasma (ICP), and the results are shown in the table below.

Table 6.

| Percent Ash | | | | | |
| --- | --- | --- | --- | --- | --- |
| Number of wash cycles | 0 | 5 | 10 | 15 | 20 |
| Untreated water | 0.13 | 0.36 | 0.79 | 1.45 | 2.58 |
| Treated water | 0.13 | 0.19 | 0.65 | 0.76 | 0.83 |
| | | | | | |
| Calcium (ppm) | | | | | |
| Number of wash cycles | 0 | 5 | 10 | 15 | 20 |
| Untreated water | 121 | 1120 | 2750 | 5240 | 10100 |
| Treated water | 125 | 750 | 3080 | 3570 | 4120 |

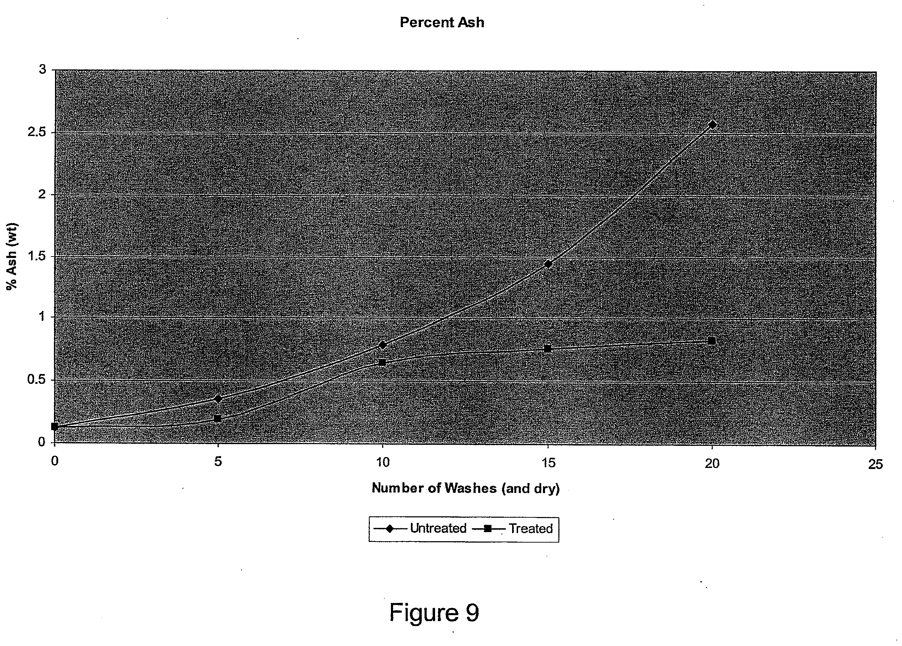

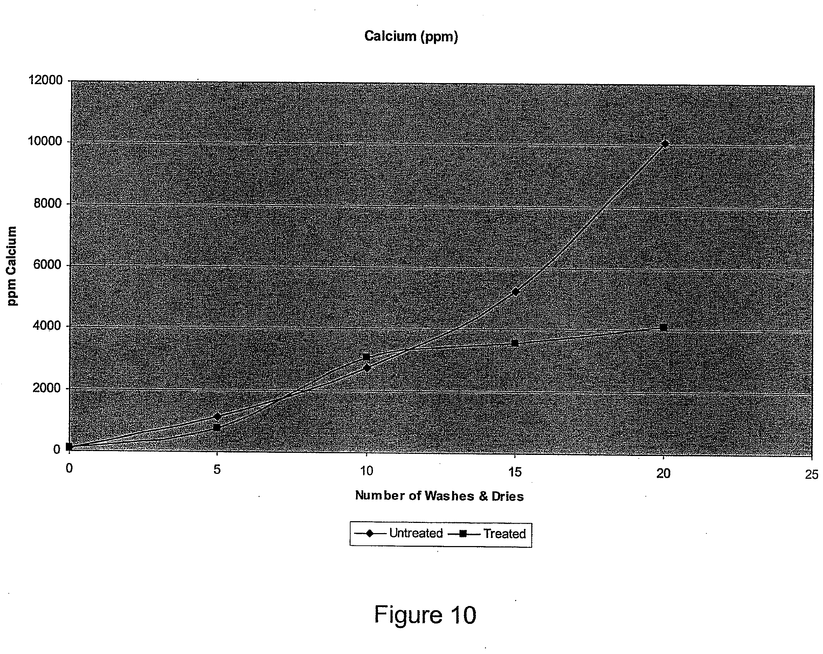

These results are also graphically depicted in Figures 9 and 10. As can be seen from these results, the wash cloths washed using the treated water had a much lower amount of ash remaining on the cloths at each test point. For example, after 20 washes, the cloths washed with treated water had 32% of the amount of ash as those washed with the untreated water. With respect to the amount of calcium present on the wash clothes, at all test points other than the 10 cycle test point, there was less calcium on the wash cloths washed with treated water than those washed with untreated water.

The amount of other metals on the wash cloths was also measured. These results are shown in the table below.

Table 7.

| Copper (ppm) | | | | | |
|---|---|---|---|---|---|
| Number of wash cycles | 0 | 5 | 10 | 15 | 20 |
| Untreated water | 37.7 | 18.4 | 25.2 | 27.4 | 35.1 |
| Treated water | 37.7 | 16.6 | 16 | 15.3 | 16 |
| Magnesium (ppm) | | | | | |
| Number of wash cycles | 0 | 5 | 10 | 15 | 20 |
| Untreated water | 23.9 | 146 | 198 | 242 | 295 |
| Treated water | 22.8 | 176 | 408 | 460 | 543 |
| | | | | | |
| Phosphorus (ppm) | | | | | |
| Number of wash cycles | 0 | 5 | 10 | 15 | 20 |
| Untreated water | 10.3 | 18.6 | 29.1 | 42.2 | 61.5 |
| Treated water | 7.56 | 22.3 | 73.1 | 77.7 | 97 |
| | | | | | |
| Iron (ppm) | | | | | |
| Number of wash cycles | 0 | 5 | 10 | 15 | 20 |
| Untreated water | 4.73 | 3.81 | 3.88 | 3.67 | 3.69 |
| Treated water | 5.21 | 4.23 | 3.7 | 3.44 | 3.53 |

As can be seen from this chart, there was less copper in the samples washed with the treated water than the untreated water. However, there was more magnesium in the samples washed with the treated water than the untreated water. This was to be expected, as the conversion agent used for this study comprised magnesium, and it may have partially dissolved over time.

*Example 4 (for reference only)- Effect of Water Temperature on Conversion Agents*

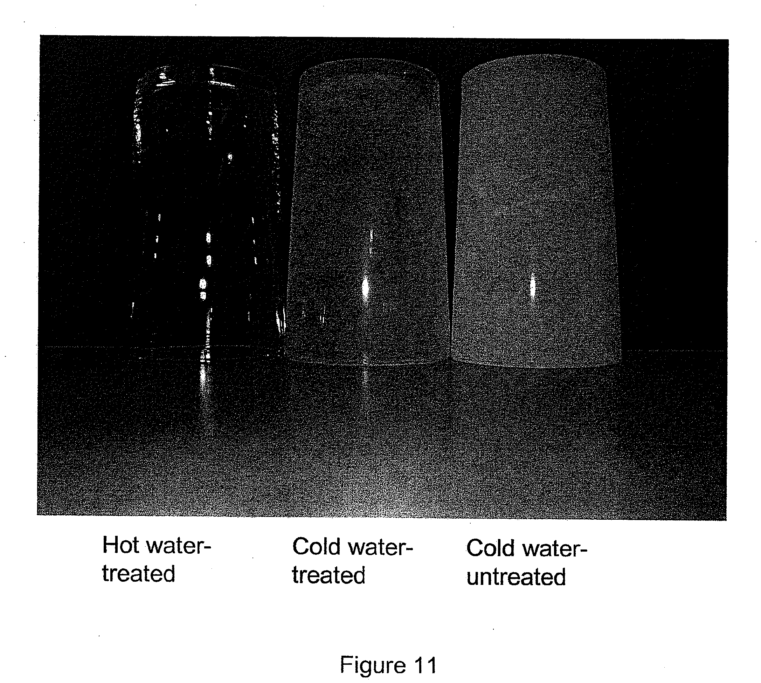

The effect of the temperature of the water contacted by a conversion agent on filming or spotting of glassware was determined. Water with a hardness of 17 grains per gallon was connected to a tank comprising a conversion agent of the present invention, i.e., magnesium oxide. The tank was then connected to an automatic dishwashing machine. Glasses in a glassware rack were set into the dish machine. The dish machine was set to automatically run 100 cycles back to back. A cycle is a complete wash, rinse, and 15 second pause. After 100 cycles the test was stopped and the glasses were observed. No detergents were used for this test. The test was repeated with hot water, i.e., 140°F to 150°F, and cold water. A control of untreated water, i.e., no contact with the conversion agent was also run. The glasses were visually inspected for spotting and filming. The results are shown in Figure 11.

In Figure 11, the glass on the left was the glass treated with a conversion agent and hot water, the glass in the middle of the picture was treated with a conversion agent and cold water, and the glass on the right was the control in cold water, i.e., not contacted with the conversion agent. As can be seen from this figure, the glass washed with the hot water contacted with the conversion agent yielded substantially spotless glasses. The glass treated with the cold water contacted with the conversion agent, showed less filming than the control glass, but was not as clean or clear as the hot water treated glass. These results were surprising as calcium becomes less soluble, i.e., precipitates more, when heated.

*Example 5 (for reference only)- Use of a Conversion Agent to Prevent Soap Scum*

A test was run to determine the effect of treated water, i.e., water contacted with a conversion agent, on the formation of soap scum. The cold water stream to two showers was attached to a tank comprising a solid source of a conversion agent, i.e., magnesium oxide. The cold water had 17 grain hardness before treatment. The hot water was blended at the shower temperature control knob, and comprised softened water.

After two months of running, the showers with and without treatment were inspected. It was observed that the tiled shower walls were more easily cleaned in the treated shower stalls, compared to the non-treated shower stalls. The white film, i.e., soap scum, that formed was much more easily removed by wiping in the shower stall that had treated water running in it. The untreated stalls had a gummy soap scum that was sticky and harder to wipe off. It was also noted that the shower heads in the un-treated stalls had a much more visible white scale present than those in the treated shower stalls.

The shower stalls were also subjected to a fizz test. An acid was sprayed onto the shower walls and observed to see if there was any fizzing upon contact. Fizzing indicates the presence of calcium carbonate. The treated shower stalls showed no fizz when sprayed with an acid. However, the shower stall without the treatment showed a pronounced fizz when contacted by the acid.

*Example 6 (for reference only) - Use of a Water Treatment System for Vehicle Care*

A test was run to determine the effect of using treated water in a vehicle washing facility. Two tanks comprising a solid source of magnesium oxide as a conversion agent were installed in an automatic vehicle washing facility. The first tank (Tank 1) was installed on the first presoak arch. The second tank (Tank 2) was installed on the second presoak arch. The pH, TDS, and temperature of the untreated hot water, treated water from Tank 1, and treated water from Tank 2 were measured. The amount of $SiO_3$ in the untreated and treated waters was also measured.

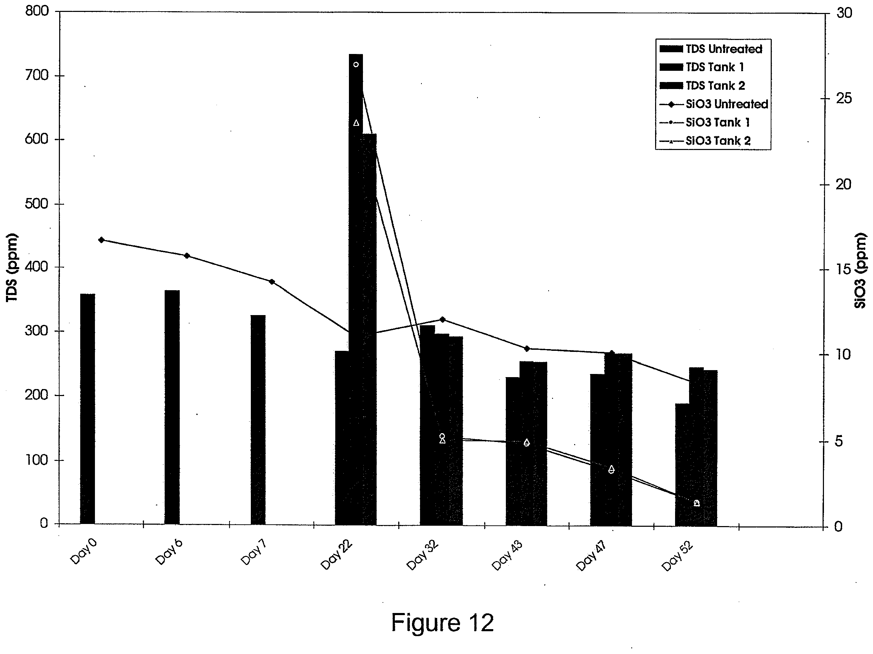

Figure 12 is a graphical depiction of the results of this test. As can be seen in this figure, the tanks (Tank 1 and Tank 2) were installed on Day 22. The TDS increased on this day. However, by Day 32, the levels of TDS in the treated water were less than the level of TDS in the untreated water. As can also be seen in this figure, after the tanks were installed, the amount of $SiO_3$ in the water dropped significantly in the treated water samples. It was also observed that the vehicles washed with treated water during the pre-soak had a much lower amount of scaling after being washed than those that had been washed using untreated water during the presoak stage. Overall, using water treated in accordance with the methods of the present invention had beneficial effects when used at a vehicle washing facility.

**Claims**

1. A method for reducing solubilized water hardness in a water source, said method comprising:

   contacting the water source having a pH of between 6 and 9 with a composition comprising a solid conversion agent being magnesium oxide, wherein the conversion agent causes calcium hardness ions in the water source to substantially precipitate in a non-calcite crystalline form that does not need to be removed from the water source, such that the solubilized water hardness is substantially reduced,
   **characterized in that** the step of contacting the water with the conversion agent comprises passing the water through a media bed of magnesium oxide particles, the media being held in a tank.

2. The method of claim 1, wherein the non-calcite crystalline form is aragonite.

3. The method of claim 1, wherein the conversion agent is insoluble in water.

4. The method of claim 1, wherein the solid conversion agent is contained in a column.

5. The method of claim 4, wherein the column is agitated by a method selected from the group consisting of the flow of water through the column, by fluidization, mechanical agitation, high flow backwash, recirculation, and combinations thereof.

6. The method of claim 1, wherein the temperature of the water source prior to contact with the conversion agent is between 54.44°C (130°F) and 85°C (185°F).

**Patentansprüche**

1. Verfahren zum Reduzieren einer Härte von löslich gemachtem Wasser in einer Wasserquelle, wobei das Verfahren Folgendes umfasst:

   Inberührungbringen der Wasserquelle, die einen pH-Wert zwischen 6 und 9 aufweist, mit einer Zusammensetzung, die ein festes Umsetzungsmittel umfasst, das Magnesiumoxid ist, wobei das Umsetzungsmittel bewirkt, dass Kalziumhärteionen in der Wasserquelle im Wesentlichen in einer Nicht-Kalzit-Kristallform ausfällen, die nicht aus der Wasserquelle entfernt werden muss, derart, dass die Härte von löslich gemachtem Wasser im Wesentlichen reduziert wird,
   **dadurch gekennzeichnet, dass** der Schritt des Inberührungbringens des Wassers mit dem Umsetzungsmittel ein Durchleiten des Wassers durch ein Mediumbett aus Magnesiumoxidteilchen umfasst, wobei die das Medium in einem Tank gehalten wird.

2. Verfahren nach Anspruch 1, wobei die Nicht-Kalzit-Kristallform Aragonit ist.

3. Verfahren nach Anspruch 1, wobei das Umsetzungsmittel in Wasser unlöslich ist.

4. Verfahren nach Anspruch 1, wobei das feste Umsetzungsmittel in einer Säule enthalten ist.

5. Verfahren nach Anspruch 4, wobei die Säule durch ein Verfahren gerührt wird, das aus der Gruppe ausgewählt ist, die aus dem Wasserfluss durch die Säule, durch Fluidisierung, mechanisches Rühren, Rückspülung mit hohem Durchfluss, Rezirkulation und Kombinationen davon besteht.

6. Verfahren nach Anspruch 1, wobei die Temperatur der Wasserquelle vor dem Inberührungbringen mit dem Umsetzungsmittel zwischen 54,44 °C (130 °F) und 85 °C (185 °F) ist.

**Revendications**

1. Procédé de réduction de la dureté de l'eau solubilisée dans une source d'eau, ledit procédé comprenant :

   la mise en contact de la source d'eau ayant un pH compris entre 6 et 9 avec une composition comprenant un agent de conversion solide étant de l'oxyde de magnésium,
   dans lequel l'agent de conversion amène des ions de dureté calcium dans la source d'eau à se précipiter sensiblement sous une forme cristalline non-calcite qui n'a pas besoin d'être retirée de la source d'eau, de telle sorte que la dureté de l'eau solubilisée est sensiblement réduite, **caractérisé en ce que** l'étape de mise en contact de l'eau avec l'agent de conversion comprend le passage de l'eau à travers un lit de milieu de particules d'oxyde de magnésium, le milieu étant maintenu dans un réservoir.

2. Procédé selon la revendication 1, dans lequel la forme cristalline non-calcite est l'aragonite.

3. Procédé selon la revendication 1, dans lequel l'agent de conversion est insoluble dans l'eau,

4. Procédé selon la revendication 1, dans lequel l'agent de conversion solide est contenu dans une colonne.

5. Procédé selon la revendication 4, dans lequel la colonne est agitée par un procédé choisi dans le groupe constitué par le débit d'eau à travers la colonne, par fluidisation, par agitation mécanique, par réextraction à haut débit, par recirculation et leurs combinaisons.

6. Procédé selon la revendication 1, dans lequel la température de la source d'eau avant la mise en contact avec l'agent de conversion est comprise entre 54,44 °C (130 °F) et 85 °C (185 °F).

Figure 1

Figure 2

Ratio of MgO/Calcite

| 100/0 | 75/25 | 50/50 | 25/75 | 0/100 |

EP 2 144 986 B1

Figure 3

Figure 4

Un-treated

Treated

Figure 6

Figure 7

Figure 8

Figure 9

Percent Ash

Figure 10

Figure 11

Hot water-
treated

Cold water-
treated

Cold water-
untreated

Figure 12

**EP 2 144 986 B1**

**Patent documents cited in the description**

• US 4036749 A